# FASCICULE DE BREVET EUROPEEN

(11) **EP 0 518 735 B1**
(45) Date de publication et mention de la délivrance du brevet: **10.05.1995**
(21) Numéro de dépôt: 92401524.1
(22) Date de dépôt: 04.06.1992
(51) Int. Cl.: H01S 3/30

(54) **Laser Raman**
Ramanlaser
Raman laser

(30) Priorité: 10.06.1991 FR 9107023
(43) Date de publication de la demande: 16.12.1992
(73) Titulaire: COMPAGNIE INDUSTRIELLE DES LASERS CILAS, F-91460 Marcoussis (FR)
(72) Inventeur: Garcia, Frédérique, F-91160 Longjumeau (FR); Pinson, Pierre, F-91640 Vaugrigneuse (FR); Vincent, Daniel, F-92160 Antony (FR); Chiquier, Jean-Michel, F-91940 Les Ulis (FR)
(74) Mandataire: Bonnetat, Christian

(56) Documents cités:
- EP-A- 0 393 528
- WO-A-86/02784
- US-A- 4 821 272

## Description

La présente invention concerne un laser fournissant un rayonnement obtenu par stimulation d'un milieu produisant un effet Raman.

De façon connue, un laser à effet Raman est constitué d'un laser de pompage, émettant un rayonnement à une première fréquence optique, qui sert à exciter un milieu, produisant, par effet Raman, un deuxième rayonnement à une deuxième fréquence, de valeur différente de celle de la première.

Le laser de pompage est usuellement constitué d'une première cavité résonnante contenant un milieu optique amplificateur, et limitée d'un côté par un premier miroir totalement réfléchissant, tandis qu'une partie du rayonnement peut s'échapper de l'autre côté au travers d'un deuxième miroir partiellement transparent. Le taux de réflexion de ce deuxième miroir détermine le coefficient de surtension de cette première cavité résonnante. Un déclencheur optique est situé sur le trajet optique entre les deux miroirs, et sert à retarder le déclenchement du laser de pompage jusqu'au moment où le milieu à effet laser a reçu suffisamment d'énergie, ce qui permet ainsi un déclenchement à front plus raide. Ce déclencheur optique peut être un corps dont le facteur de transmission est commandé électriquement, ou bien un corps absorbant saturable, qui devient transparent lorsqu'il a reçu une certaine énergie optique.

Le milieu à effet Raman est usuellement un gaz sous pression, tel le méthane, contenu dans une cellule limitée par deux fenêtres opposées. Le premier rayonnement est injecté dans ladite cellule au travers d'une des fenêtres, pour y créer, par effet Raman, ledit deuxième rayonnement. Une optique convergente, située entre ledit laser de pompage et ladite cellule, sert à focaliser ce premier rayonnement de façon à en augmenter la densité dans un volume limité dudit milieu à effet Raman, et ainsi améliorer le rendement de conversion de l'énergie optique.

Le brevet européen EP-A-0 063 205 décrit un tel montage. Cependant, ce document indique qu'en plus du rayonnement par effet Raman, il se produit aussi un rayonnement par effet Brillouin, qui représente un danger pour les organes optiques du laser de pompage et en diminue l'énergie. Pour éliminer ce rayonnement par effet Brillouin, il est utilisé un laser polarisé, suivi d'un polariseur et d'une lame quart d'onde entre le laser de pompage et la cellule contenant le milieu à effet Raman, de façon à bloquer le retour du rayonnement par effet Brillouin dans le laser de pompage.

Un tel montage impose des contraintes, d'une part du fait de la nécessité de choisir un laser polarisé, et d'autre part du fait de la nécessité d'implanter un polariseur et une lame quart d'onde pour éliminer le rayonnement émis par effet Brillouin. De plus, un tel montage n'évite pas l'effet néfaste du rayonnement créé par effet Brillouin sur le rendement de la conversion, dans le milieu à effet Raman, entre le rayonnement émis par le laser de pompage et le rayonnement Raman qui en résulte, et donc sur la puissance optique disponible en sortie, à la fréquence Raman.

De même, le brevet US-A-4 821 272 indique également qu'en plus du rayonnement par effet Raman, il se produit aussi un rayonnement par effet Brillouin, qui est en compétition directe avec l'effet Raman, et diminue le rendement de conversion par effet Raman. Pour éliminer ce rayonnement par effet Brillouin, il est inséré un polariseur et une lame quart d'onde entre le laser de pompage et la cellule contenant le milieu à effet Raman, de façon à bloquer le retour du rayonnement par effet Brillouin dans ladite première cavité résonnante du laser de pompage. Ce même document indique un autre montage, compact et parfaitement aligné, qui permet de limiter l'énergie émise par effet Brillouin, ce qui évite la nécessité d'implanter un polariseur, mais ne permet pas d'éviter entièrement l'influence néfaste due à l'effet Brillouin.

Ainsi, cet effet Brillouin impose des contraintes de choix de composants et de montage, et diminue le rendement de conversion par effet Raman, donc la puissance en sortie à la fréquence Raman. Aussi, l'objet principal des dispositifs connus, est-il d'éliminer autant que possible le rayonnement dû à l'effet Brillouin.

La présente invention vise à éviter ces contraintes, et permet, de plus, d'obtenir une puissance de sortie accrue, à la fréquence Raman.

A cet effet, selon l'invention, un premier mode de réalisation du laser à effet Raman, comprenant :
- un laser de pompage formé d'une première cavité résonnante résonnant selon un premier axe optique, limitée respectivement, sur deux côtés opposés, par un premier miroir et un deuxième miroir, d'axes optiques alignés avec ledit premier axe optique, respectivement totalement réfléchissant et faiblement réfléchissant à une première fréquence optique, ladite première cavité résonnante comportant un déclencheur optique, capable de retarder la résonance de ladite première cavité résonnante, ainsi qu'un milieu optique amplificateur pouvant être excité par un moyen d'excitation, cette première cavité résonnante fournissant, au travers dudit deuxième miroir, un premier rayonnement optique, à ladite première fréquence optique ;
- un milieu à effet Raman, contenu dans une cellule, recevant ledit premier rayonnement, et fournissant, en réponse, un deuxième rayonnement par effet Raman, à une deuxième fréquence optique, ainsi qu'un troisième rayonnement, à une troisième fréquence optique, obtenu par effet Brillouin ; et
- une seconde cavité résonnante résonnant selon un second axe optique, contenant ladite cellule, et accordée à ladite deuxième fréquence optique, limitée, d'un côté, par un troisième miroir, d'axe optique aligné avec ledit second axe optique, totalement transparent à ladite première fréquence optique et totalement réfléchissant à ladite deuxième fréquence optique, et limitée, du côté opposé, par un quatrième miroir, d'axe optique aligné avec ledit second axe optique, totalement transparent à ladite première fréquence optique et partiellement réfléchissant à ladite deuxième fréquence optique, et comportant un télescope à foyer réel, d'axe optique aligné avec ledit second axe optique, dont le point de focalisation est situé dans ledit milieu à effet Raman, est remarquable en ce que, à ladite troisième fréquence optique, lesdits deuxième et troisième miroirs sont transparents, permettant ainsi le renvoi dudit troisième rayonnement dans ladite première cavité résonnante, et ledit premier miroir est réflecteur.

Ainsi, contrairement à ce qui est fait dans la technique antérieure, le rayonnement créé par effet Brillouin peut revenir dans la première cavité résonnante du laser de pompage et lui fournir une excitation complémentaire lui permettant, en retour, de fournir une énergie plus élevée au milieu à effet Raman, donc d'avoir une puissance plus élevée en sortie du laser à effet Raman. On notera que ce rayonnement créé par effet Brillouin est par principe retardé par rapport au premier rayonnement qui l'engendre, de sorte que ce rayonnement Brillouin n'a pas à être bloqué par le déclencheur optique avant le déclenchement du laser de pompage, et que, par contre, il vient renforcer le début de l'impulsion dès que ce déclencheur optique laisse passer suffisamment du premier rayonnement, ce qui équivaut à accélérer l'effet du changement d'état optique de ce déclencheur optique. Par ailleurs, il n'y a plus à prendre des mesures d'alignement critique des éléments optiques, comme indiqué dans le brevet US-A-4 821 272, pour minimiser le rayonnement par effet Brillouin.

De ce fait, le nombre de pièces optiques est diminué, ainsi que les distorsions correspondantes.

Par ailleurs, dans un deuxième mode de réalisation du laser à effet Raman conforme à l'invention et comportant :
- un laser de pompage formé d'une première cavité résonnante résonnant selon un premier axe optique, limitée respectivement, sur deux côtés opposés, par un premier miroir et un deuxième miroir, d'axes optiques alignés avec ledit premier axe optique, respectivement totalement réfléchissant et faiblement réfléchissant à une première fréquence optique, ladite première cavité résonnante comportant un déclencheur optique, capable de retarder la résonance de ladite première cavité résonnante, ainsi qu'un milieu optique amplificateur pouvant être excité par un moyen d'excitation, cette première cavité résonnante fournissant, au travers dudit deuxième miroir, un premier rayonnement optique, à ladite première fréquence optique ;
- un milieu à effet Raman, contenu dans une cellule, recevant ledit premier rayonnement, et fournissant, en réponse, un deuxième rayonnement par effet Raman, à une deuxième fréquence optique, ainsi qu'un troisième rayonnement, à une troisième fréquence optique, obtenu par effet Brillouin ;
- une seconde cavité résonnante résonnant selon un second axe optique, contenant ladite cellule, et accordée à ladite deuxième fréquence optique, limitée, d'un côté, par un troisième miroir, d'axe optique aligné avec ledit second axe optique, totalement transparent à ladite première fréquence optique et partiellement réfléchissant à ladite deuxième fréquence optique, et limitée, du côté opposé, par un quatrième miroir, d'axe optique aligné avec ledit second axe optique, totalement transparent à ladite première fréquence optique et totalement réfléchissant à ladite deuxième fréquence optique, et comportant un télescope à foyer réel, d'axe optique aligné avec ledit second axe optique, dont le point de focalisation est situé dans ledit milieu à effet Raman ; et
- un élément optique extracteur, situé sur le trajet optique entre ladite première cavité résonnante et ladite cellule, recevant ledit premier rayonnement issu de ladite première cavité résonnante et le transmettant au moins partiellement à ladite cellule, on prévoit que, à ladite troisième fréquence optique, lesdits deuxième miroir et troisième miroirs sont transparents, permettant ainsi le renvoi dudit troisième rayonnement dans ladite première cavité résonnante, tandis que ledit premier miroir est réflecteur, et que ledit élément optique extracteur est, à ladite troisième fréquence optique, apte à permettre le passage dudit troisième rayonnement vers ladite première cavité résonnante, et est apte à diriger ledit deuxième rayonnement dans une direction autre que celle allant vers la première cavité résonnante, lui permettant ainsi de sortir dudit laser à effet Raman. Ce deuxième mode de réalisation présente les mêmes avantages que ceux indiqués pour le premier mode, du fait que le rayonnement créé par effet Brillouin peut revenir dans la première cavité résonnante du laser de pompage et lui fournir une excitation complémentaire lui permettant, en retour, de fournir une énergie plus élevée au milieu à effet Raman, et donc d'avoir une puissance plus élevée en sortie du laser à effet Raman.

Selon un troisième mode de réalisation, le laser à effet Raman selon l'invention, comportant :
- un laser de pompage formé d'une première cavité résonnante résonnant selon un premier axe optique, limitée respectivement, sur deux côtés opposés, par un premier miroir et un deuxième miroir, d'axes optiques alignés avec ledit premier axe optique, respectivement totalement réfléchissant et faiblement réfléchissant à une première fréquence optique, ladite première cavité résonnante comportant un déclencheur optique, capable de retarder la résonance de ladite première cavité résonnante, ainsi qu'un milieu optique amplificateur pouvant être excité par un moyen d'excitation, cette première cavité résonnante fournissant, au travers dudit deuxième miroir, un premier rayonnement optique, à ladite première fréquence optique ;
- un milieu à effet Raman, contenu dans une cellule, recevant ledit premier rayonnement, et fournissant, en réponse, un deuxième rayonnement par effet Raman, à une deuxième fréquence optique, ainsi qu'un troisième rayonnement, à une troisième fréquence optique, obtenu par effet Brillouin ;
- une seconde cavité résonnante résonnant selon un second axe optique, contenant ladite cellule, et accordée à ladite deuxième fréquence optique, limitée, d'un côté, par un troisième miroir, d'axe optique aligné avec ledit second axe optique, totalement transparent à ladite première fréquence optique et totalement réfléchissant à ladite deuxième fréquence optique, et limitée, du côté opposé, par un quatrième miroir, d'axe optique aligné avec ledit second axe optique, totalement réfléchissant à ladite première fréquence optique et partiellement réfléchissant à ladite deuxième fréquence optique, et comportant un télescope à foyer réel, d'axe optique aligné avec ledit second axe optique, dont le point de focalisation est situé dans ledit milieu à effet Raman ;
- un polariseur optique, situé sur le trajet optique entre lesdits deuxième miroir et troisième miroir ; et
- une lame quart d'onde, accordée à ladite première fréquence, située entre ladite cellule et ledit quatrième miroir, est remarquable en ce que, à ladite troisième fréquence optique, lesdits deuxième miroir et troisième miroir et ledit polariseur sont transparents, permettant ainsi le renvoi dudit troisième rayonnement dans ladite première cavité résonnante, tandis que ledit premier miroir est réflecteur.

Ce troisième mode de réalisation présente aussi les avantages des deux premiers modes de réalisation, du fait que le rayonnement créé par effet Brillouin peut revenir dans la cavité résonnante du laser de pompage et lui fournir une excitation complémentaire lui permettant, en retour, de fournir une énergie plus élevée au milieu à effet Raman, donc d'avoir une puissance plus élevée en sortie du laser à effet Raman. En particulier, la partie du premier rayonnement qui revient de la deuxième cavité résonnante ne peut revenir perturber la première cavité résonnante. La partie du deuxième rayonnement qui est réfléchie par le troisième miroir et le quatrième miroir contribue aussi à augmenter le rendement.

Il est à noter que ledit laser à effet Raman selon l'un des modes de réalisation ci-dessus peut comporter un laser YAG:Nd faisant office dudit laser de pompage.

Par ailleurs, ledit laser à effet Raman présente l'avantage, pour l'ensemble des modes de réalisation indiqués ci-dessus, de pouvoir comporter ledit déclencheur optique sous forme d'un absorbant saturable.

De ce fait, la structure de commande dudit laser est très simple. De plus, l'énergie créée par effet Brillouin fournit une excitation supplémentaire favorisant la commutation dudit absorbant saturable et l'extraction d'énergie du milieu amplificateur.

De plus, pour l'ensemble des modes de réalisation indiqués ci-dessus, le laser à effet Raman peut comporter un déflecteur, situé sur le trajet optique entre ladite première cavité résonnante et ladite cellule, et apte à défléchir d'un même angle lesdites première et troisième fréquences optiques.

Le laser à effet Raman peut ainsi être réalisé sous forme compacte.

Pour ce qui est du milieu à effet Raman et de la cellule le contenant, pour l'ensemble des modes de réalisation indiqués ci-dessus, ledit laser à effet Raman permet d'utiliser une cellule comportant une fenêtre d'entrée et une fenêtre de sortie laissant passer lesdites première, deuxième et troisième fréquences, tandis que ledit milieu Raman est un gaz.

De ce fait, on peut réaliser ledit laser à effet Raman au moyen d'une cellule de conception classique et d'un gaz usuel, disponibles dans le commerce.

Il est à noter, pour l'ensemble des modes de réalisation indiqués ci-dessus, qu'au moins une fenêtre de ladite cellule dudit laser à effet Raman peut être constituée d'un miroir.

Cela permet ainsi de diminuer le nombre de pièces optiques et de diminuer les distorsions correspondantes.

Pour l'ensemble des modes de réalisation indiqués ci-dessus, ledit laser à effet Raman a aussi l'avantage de pouvoir comporter au moins un élément focalisant et un miroir voisin réalisés sous la forme d'un seul élément optique.

Le nombre de pièces optiques est ainsi diminué et leur distorsion réduite.

Par ailleurs, pour l'ensemble des modes de réalisation indiqués ci-dessus, ledit laser à effet Raman peut avoir au moins un élément focalisant qui a une distance focale identique pour la première et la deuxième fréquence.

Le trajet des rayonnements à la première et la deuxième fréquence est ainsi le même.

Les figures du dessin annexé feront bien comprendre comment l'invention peut être réalisée. Sur ces figures, des références identiques désignent des éléments identiques ou semblables.

La figure 1 illustre un premier mode de réalisation du laser à effet Raman selon l'invention.

La figure 2 montre un deuxième mode de réalisation du laser à effet Raman selon l'invention.

La figure 3 représente un troisième mode de réalisation du laser à effet Raman selon l'invention.

La figure 4 représente les formes d'onde des impulsions obtenues.

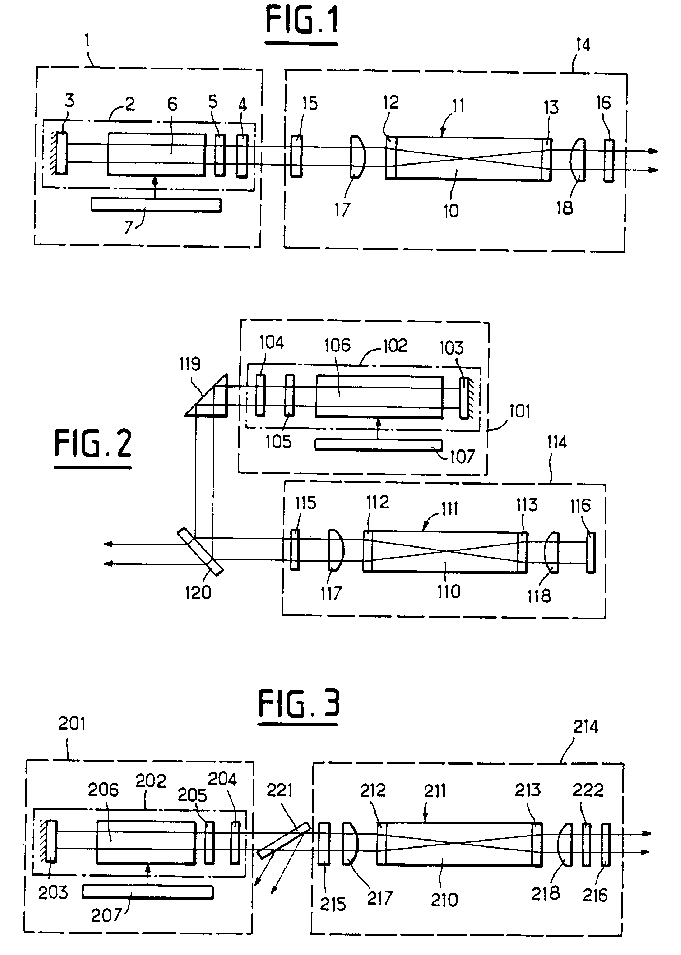

Le laser à effet Raman, selon la présente invention et représenté sur la figure 1, est constitué d'un laser de pompage 1, par exemple du type YAG:Nd, formé d'une première cavité résonnante 2 ayant un premier axe optique, qui est limitée, d'un côté, par un premier miroir 3, et, du côté opposé, par un deuxième miroir 4, tous deux ayant un axe optique aligné avec ledit premier axe optique. Cette première cavité résonnante 2 contient un déclencheur optique 5 placé entre le premier miroir 3 et le deuxième miroir 4, et qui a pour fonction de retarder le début des impulsions optiques créées par un milieu optique amplificateur 6 situé dans ladite première cavité résonnante 2 et d'axe optique aligné avec ledit premier axe optique ; ledit milieu optique amplificateur 6 est susceptible d'être excité par un moyen d'excitation 7, tel une lampe à éclairs. Le déclencheur optique 5 produit un amortissement de l'oscillation de ladite première cavité résonnante 2, de façon à éviter de commencer à émettre alors que le milieu optique amplificateur 6 n'a pas encore entièrement absorbé l'énergie venant du moyen d'excitation 7. Ce laser de pompage 1 fournit un premier rayonnement, sous forme d'impulsions, à une première fréquence correspondant à une longueur d'onde de 1,06 »m. Ledit premier miroir 3 est totalement réfléchissant à ladite première fréquence, tandis que ledit deuxième miroir 4 présente un coefficient de réflexion relativement faible à cette première fréquence, et laisse ainsi passer une grande partie de ce premier rayonnement vers l'extérieur de ladite première cavité résonnante 2.

Un milieu à effet Raman 10, constitué, dans cet exemple, de méthane sous pression, peut recevoir ledit premier rayonnement, et est apte à émettre en réponse, par effet Raman, un deuxième rayonnement à une deuxième fréquence correspondant à une longueur d'onde de 1,54 »m, ainsi qu'un troisième rayonnement, à une troisième fréquence de valeur voisine de celle de ladite première fréquence, par effet Brillouin. Ce milieu à effet Raman 10 est contenu dans une cellule 11 limitée par une première et une seconde fenêtre, respectivement 12 et 13, situées dans deux côtés opposés de cette cellule 11.

Lesdits troisième et quatrième miroirs ont un même second axe optique, sensiblement perpendiculaire aux deux fenêtres 12 et 13, et cette cellule 11 reçoit, selon ledit second axe optique, ledit premier rayonnement optique au travers de la première fenêtre 12. Cette cellule 11 est placée dans une seconde cavité résonnante 14, d'axe optique aligné avec ledit second axe optique, résonnant à ladite deuxième fréquence, et limitée, d'un côté, par un troisième miroir 15 totalement transparent auxdites première et troisième fréquences, et totalement réfléchissant à ladite deuxième fréquence, et limitée, du côté opposé, par un quatrième miroir 16, transparent à ladite première fréquence et partiellement réfléchissant à ladite deuxième fréquence. Dans cette seconde cavité résonnante 14 il est placé, respectivement de part et d'autre dudit milieu à effet Raman 10, un premier élément focalisant 17, tel une lentille, ainsi qu'un second élément focalisant 18, tel une lentille, faisant converger ou collimatant ce premier rayonnement, respectivement entrant ou réfléchi, dans un volume de taille limitée dudit milieu à effet Raman 10.

Les axes optiques desdits troisième miroir 15, quatrième miroir 16, premier élément focalisant 17 et second élément focalisant 18 sont alignés avec ledit second axe optique, et les premier et second éléments focalisants, respectivement 17 et 18, sont placés de telle façon qu'ils font converger vers un même point, situé dans ledit milieu Raman 10, tout faisceau de rayons parallèles audit second axe optique et dirigé vers ledit milieu à effet Raman 10. La seconde cavité résonnante 14 comporte ainsi une optique formant télescope, constituée des premier et second éléments focalisants 17 et 18, qui fait converger les rayonnements réfléchis dans cette seconde cavité résonnante 14 dans un volume de taille très limitée dudit milieu à effet Raman 10.

Le premier miroir 3 est réfléchissant à ladite troisième fréquence, tandis que le deuxième miroir 4 est au moins partiellement transparent à ladite troisième fréquence. Ce deuxième miroir 4 peut être un miroir plan, ce qui en facilite la réalisation.

Sur la figure 2, on a représenté un laser à effet Raman selon l'invention, qui comporte les mêmes éléments que ceux représentés à la figure 1, avec des propriétés de réflexion modifiées pour ce qui concerne certains miroirs, référencés par un même numéro de même dizaine et unité que celui de la figure 1, précédé de la centaine 1. Seule la fonction des éléments nouveaux, ou celle des miroirs déjà décrits lorsqu'elle diffère, est explicitée ci-dessous.

Un laser de pompage 101, correspondant au laser de pompage 1, comporte des éléments repérés par les références 102 à 107 respectivement semblables aux éléments repérés par les références 2 à 7 et ayant la même fonction. De même, une cellule 111 comporte ou est associée à des éléments 112, 113, 110, 117 et 118 respectivement semblables aux éléments 12, 13, 10, 17 et 18, et ayant la même fonction. Par contre, lesdits troisième et quatrième miroirs 15 et 16 sont respectivement remplacés par des troisième 115 et quatrième 116 miroirs, ayant la même position relative, mais avec d'autres propriétés de réflexion. Ainsi, le troisième miroir 115 est encore totalement transparent à la première fréquence optique, mais est partiellement réfléchissant à la deuxième fréquence optique, tandis que le quatrième miroir 116 est encore transparent à la première fréquence optique mais est totalement réfléchissant à la deuxième fréquence optique.

Ce montage comporte, de plus, un déflecteur 119, ainsi qu'un miroir 120 dichroïque ayant une fonction d'élément optique extracteur, situés entre le deuxième miroir 104 et le troisième miroir 115, le déflecteur 119 ayant pour fonction de changer la direction des faisceaux optiques entrant ou sortant dudit laser de pompage 101, tandis que le miroir 120 dichroïque a un même effet et, de plus, a ladite fonction d'élément optique extracteur séparant le faisceau optique l'atteignant en deux faisceaux d'orientations différentes, la deuxième fréquence optique pouvant ainsi sortir en le traversant.

La figure 3 représente un troisième mode de réalisation d'un laser à effet Raman selon l'invention, qui comporte les mêmes éléments que ceux représentés à la figure 1, avec des propriétés de réflexion modifiées pour ce qui concerne certains miroirs, référencés par un même numéro de dizaine et d'unité que celui de la figure 1, précédé de la centaine 2. Seule la fonction des éléments nouveaux par rapport à cette figure 1, ou celle des miroirs déjà décrits lorsqu'elle diffère, est explicitée ci-dessous.

Un laser de pompage 201, correspondant au laser de pompage 1, comporte des éléments repérés par les références 202 à 207 respectivement semblables aux éléments repérés par les références 2 à 7 et ayant la même fonction, le rayonnement issu de ce laser de pompage 201 étant polarisé par un moyen tel une lame polarisante, non représentée. De même, une cellule 211 comporte ou est associée à des éléments 212, 213, 210, 215, 217 et 218 respectivement semblables aux éléments 12, 13, 10, 15, 17 et 18, et ayant la même fonction. Par contre, ledit quatrième miroir 16 est remplacé par un quatrième miroir 216, ayant la même position relative, mais avec d'autres propriétés de réflexion. Ainsi, le quatrième miroir 216 est totalement réfléchissant à la première fréquence optique, tout en restant partiellement réfléchissant à la deuxième fréquence optique.

De plus, un polariseur 221 est situé entre ledit deuxième miroir 204 et ledit troisième miroir 215, tandis qu'une lame quart d'onde 222, accordée à ladite première fréquence, est située entre le second élément focalisant 218 et ledit quatrième miroir 216. Ledit polariseur 221 est orienté de façon telle qu'il laisse passer le rayonnement polarisé issu de ladite première cavité résonnante 202.

Le fonctionnement du montage de la figure 1 est le suivant. Le moyen d'excitation 7 émet une impulsion lumineuse qui excite le milieu optique amplificateur 6. Celui-ci, en réponse, tend à créer une émission laser amplifiée par la première cavité résonnante 2 au moyen des premier 3 et deuxième 4 miroirs. Cependant, le coefficient de réflexion du deuxième miroir 4 étant faible, par exemple de l'ordre de 20 à 30 pour cent, le coefficient de surtension de cette première cavité résonnante 2 est relativement faible, et, de plus, le déclencheur optique 5 diminue encore cette surtension. De ce fait, l'oscillation ne peut prendre naissance. Lorsque le déclencheur optique 5 commence à devenir transparent, par suite d'une commande électrique ou naturellement dans le cas d'un absorbant saturable, l'oscillation croît très lentement et il laisse passer une partie notable du premier rayonnement, ce qui a pour effet d'exciter ledit milieu à effet Raman 10, qui produit ledit troisième rayonnement par effet Brillouin. Ce troisième rayonnement est émis en retour vers ladite première cavité résonnante 2 et peut y pénétrer, du fait de la transparence des miroirs sur son chemin. Ce troisième rayonnement a des propriétés de conjugaison de phase qui maintiennent la cohérence du faisceau excitant le milieu à effet Raman 10, ce qui a pour effet d'apporter et d'extraire une énergie complémentaire dans ladite première cavité résonnante 2, et qui entraîne, en retour, une excitation accrue fournie audit milieu à effet Raman 10 qui fournit alors un second rayonnement Raman à 1,54 »m de puissance supérieure à celle qu'il fournirait si ledit troisième rayonnement par effet Brillouin était bloqué en retour vers le laser de pompage 1. La longueur d'interaction dudit troisième rayonnement avec ledit milieu optique amplificateur 6 est accrue du fait que ledit premier miroir 3 est réfléchissant à ladite troisième fréquence. De plus, la seconde cavité résonnante 14, qui comporte ledit télescope 17 et 18, amplifie encore le deuxième rayonnement par effet Raman, du fait du passage multiple d'énergie réfléchie dans le volume déjà excité du milieu à effet Raman 10. Les éléments optiques décrits sont, de préférence, placés à proximité les uns des autres, de façon à minimiser les distorsions et les temps de parcours.

Dans le deuxième montage représenté à la figure 2, entre le laser de pompage 101 et le troisième miroir 115, sont placés le déflecteur 119 et le miroir 120. De ce fait, le second axe optique, relatif à la cellule 111 comportant le milieu à effet Raman 110, peut être désaligné par rapport au premier axe optique, ce qui permet d'avoir un montage plus compact. Le premier rayonnement, issu du laser de pompage 101, est défléchi par le déflecteur 119, puis par le miroir 120, y est réfléchi selon le second axe optique, entre dans la cellule 111 et en ressort pour traverser ensuite le second élément focalisant 118 et le quatrième miroir 116. Le deuxième rayonnement émis par le milieu à effet Raman 110 est réfléchi par ce quatrième miroir 116 et peut partiellement traverser le troisième miroir 115 pour atteindre le miroir 120 qu'il traverse partiellement pour sortir du montage et constituer ainsi la sortie du laser à effet Raman. Comme précédemment, le milieu à effet Raman 110 crée un troisième rayonnement, par effet Brillouin, qui est émis en retour vers ledit laser de pompage 101, et qui suit le trajet inverse de celui suivi par ledit premier rayonnement, ce qui entraîne le même résultat qu'expliqué initialement.

Le montage représenté sur la figure 3 a un fonctionnement assez voisin de celui représenté à la figure 1, si ce n'est que le premier rayonnement de pompage, après avoir traversé le milieu à effet Raman 210 et à effet Brillouin, est totalement réfléchi par le quatrième miroir 216 et traverse à nouveau ce milieu à effet Raman 210, en y étant collimaté en retour par le second élément focalisant 218, qui focalise le rayonnement au point de focalisation du premier élément focalisant 217, ce qui augmente l'énergie reçue par le volume de taille réduite du milieu à effet Raman 210 situé autour dudit point de focalisation et augmente donc son émission par effet Raman. Le polariseur 221, orienté de façon telle qu'il soit traversé par le premier rayonnement polarisé issu du laser de pompage 201, sert à éviter que le premier rayonnement réfléchi par le quatrième miroir 216 ne vienne perturber la première cavité résonnante 202. Pour ce faire, le premier rayonnement émis par ladite première cavité résonnante 202 atteint le quatrième miroir 216 après traversée de ce polariseur 221, puis de la lame quart d'onde 222, accordée à ladite première fréquence, et qui peut être placée en tout point du trajet entre la seconde fenêtre 213 et le quatrième miroir 216. La traversée aller et retour de cette lame quart d'onde 222 entraîne une rotation angulaire de 90 degrés qui empêche la transmission, par le polariseur 221, du premier rayonnement vers ladite première cavité résonnante 202.

Dans l'ensemble des figures, il a été représenté des éléments optiques n'ayant en général qu'une seule fonction, afin de faciliter l'exposé. Cependant, plusieurs éléments optiques voisins, c'est-à-dire non séparés par un autre élément optique, peuvent être accolés, ce qui peut en faciliter le montage. De plus, certains de ces éléments optiques voisins peuvent être réalisés sous la forme d'un seul élément optique ayant les fonctions voulues, ce qui simplifie le montage, améliore ses qualités optiques et en diminue le coût. En particulier, les premier et second éléments focalisants 17 et 18 peuvent être réalisés sous la forme d'un miroir ayant les propriétés de réflectivité et transparence voulues. Les première et seconde fenêtres 12 et 13 peuvent, pour leur part, être constituées de l'élément focalisant voisin, pouvant avoir la fonction de miroir, comme expliqué ci-dessus. De même le deuxième miroir 4, le troisième miroir 15, le premier élément focalisant 17 et la première fenêtre 12 peuvent être réalisés sous la forme d'un nombre réduit de composants, et éventuellement d'un seul.

Il apparaîtra aussi à l'homme du métier qu'un déflecteur peut être utilisé dans chacun des montages exposés.

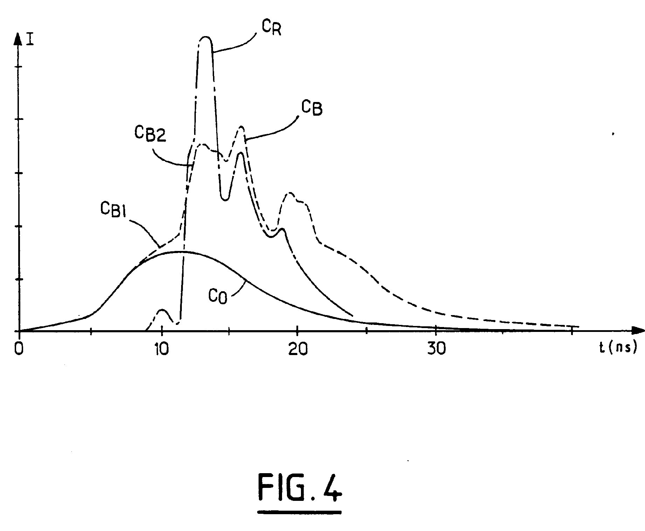

La figure 4 représente les amplitudes I des formes d'onde des rayonnements en fonction du temps t exprimé en nanosecondes. La courbe Co représente la réponse du laser de pompage 1 à 1,06 »m en l'absence de troisième rayonnement Brillouin en retour. La courbe C_{B} représente la réponse de ce laser de pompage 1 à 1,06 »m, en présence du troisième rayonnement Brillouin. On observe que cette courbe C_{B} présente un front de montée ayant son début C_{B1} confondu avec le front de montée de la courbe Co, mais qui est suivi d'une fin C_{B2} de front de montée, à front raide, qui amène approximativement un doublement de l'amplitude maximale de l'impulsion. L'amplitude de l'impulsion C_{B} décroît ensuite, de façon non monotone en fonction de l'influence de l'énergie instantanée d'excitation fournie en retour par le troisième rayonnement, après un temps de retard dû au trajet aller et retour. La courbe C_{R} représente l'amplitude, en fonction du temps, de l'impulsion à la deuxième fréquence RAMAN à 1,54 »m. On observe que cette impulsion présente un front montant raide, se produisant en même temps que la fin C_{B2} du front de montée de la courbe C_{B}, et qui décroît ensuite plus rapidement que cette courbe C_{B}, en suivant les ondulations de celle-ci. Cette impulsion C_{R} présente une durée utile plus faible que celle de l'impulsion C_{B} l'engendrant, du fait que le milieu Raman 10 a une efficacité de conversion à allure exponentielle ; ainsi, l'augmentation de l'amplitude maximale de l'impulsion d'excitation C_{B} a un effet important sur l'amplitude maximale de l'impulsion Raman C_{R}.

## Revendications

1. Laser à effet Raman, comprenant :
- un laser de pompage (1) formé d'une première cavité résonnante (2) résonnant selon un premier axe optique, limitée respectivement, sur deux côtés opposés, par un premier miroir (3) et un deuxième miroir (4), d'axes optiques alignés avec ledit premier axe optique, respectivement totalement réfléchissant et faiblement réfléchissant à une première fréquence optique, ladite première cavité résonnante (2) comportant un déclencheur optique (5), capable de retarder la résonance de ladite première cavité résonnante (2), ainsi qu'un milieu optique amplificateur (6) pouvant être excité par un moyen d'excitation (7), cette première cavité résonnante (2) fournissant, au travers dudit deuxième miroir (4), un premier rayonnement optique, à ladite première fréquence optique ;
- un milieu à effet Raman (10), contenu dans une cellule (11), recevant ledit premier rayonnement, et fournissant, en réponse, un deuxième rayonnement par effet Raman, à une deuxième fréquence optique, ainsi qu'un troisième rayonnement, à une troisième fréquence optique, obtenu par effet Brillouin ; et
- une seconde cavité résonnante (14) résonnant selon un second axe optique, contenant ladite cellule (11), et accordée à ladite deuxième fréquence optique, limitée, d'un côté, par un troisième miroir (15), d'axe optique aligné avec ledit second axe optique, totalement transparent à ladite première fréquence optique et totalement réfléchissant à ladite deuxième fréquence optique, et limitée, du côté opposé, par un quatrième miroir (16), d'axe optique aligné avec ledit second axe optique, totalement transparent à ladite première fréquence optique et partiellement réfléchissant à ladite deuxième fréquence optique, et comportant un télescope (17,18) à foyer réel, d'axe optique aligné avec ledit second axe optique, dont le point de focalisation est situé dans ledit milieu à effet Raman (10),
caractérisé en ce que, à ladite troisième fréquence optique, lesdits deuxième miroir (4) et troisième miroir (15) sont transparents, permettant ainsi le renvoi dudit troisième rayonnement dans ladite première cavité résonnante (2), et ledit premier miroir (3) est réflecteur.

2. Laser à effet Raman, comprenant :
- un laser de pompage (101) formé d'une première cavité résonnante (102) résonnant selon un premier axe optique, limitée respectivement, sur deux côtés opposés, par un premier miroir (103) et un deuxième miroir (104), d'axes optiques alignés avec ledit premier axe optique, respectivement totalement réfléchissant et faiblement réfléchissant à une première fréquence optique, ladite première cavité résonnante (102) comportant un déclencheur optique (105), capable de retarder la résonance de ladite première cavité résonnante (102), ainsi qu'un milieu optique amplificateur (106) pouvant être excité par un moyen d'excitation (107), cette première cavité résonnante (102) fournissant, au travers dudit deuxième miroir (104), un premier rayonnement optique, à ladite première fréquence optique ;
- un milieu à effet Raman (110), contenu dans une cellule (111), recevant ledit premier rayonnement, et fournissant, en réponse, un deuxième rayonnement par effet Raman, à une deuxième fréquence optique, ainsi qu'un troisième rayonnement, à une troisième fréquence optique, obtenu par effet Brillouin ;
- une seconde cavité résonnante (114) résonnant selon un second axe optique, contenant ladite cellule (111), et accordée à ladite deuxième fréquence optique, limitée, d'un côté, par un troisième miroir (115), d'axe optique aligné avec ledit second axe optique, totalement transparent à ladite première fréquence optique et partiellement réfléchissant à ladite deuxième fréquence optique, et limitée, du côté opposé, par un quatrième miroir (116), d'axe optique aligné avec ledit second axe optique, totalement transparent à ladite première fréquence optique et totalement réfléchissant à ladite deuxième fréquence optique, et comportant un télescope (117,118) à foyer réel, d'axe optique aligné avec ledit second axe optique, dont le point de focalisation est situé dans ledit milieu à effet Raman (110) ; et
- un élément optique extracteur (120), situé sur le trajet optique entre ladite première cavité résonnante (102) et ladite cellule (111), recevant ledit premier rayonnement issu de ladite première cavité résonnante (102) et le transmettant au moins partiellement à ladite cellule (111),
caractérisé en ce que, à ladite troisième fréquence optique, lesdits deuxième miroir (104) et troisième miroir (115) sont transparents, permettant ainsi le renvoi dudit troisième rayonnement dans ladite première cavité résonnante (102), et ledit premier miroir (103) est réflecteur, et en ce que ledit élément optique extracteur (120) est apte, à ladite troisième fréquence optique, à permettre le passage dudit troisième rayonnement vers ladite première cavité résonnante (102), et est apte à diriger ledit deuxième rayonnement dans une direction autre que celle allant vers la première cavité résonnante (102), lui permettant ainsi de sortir dudit laser à effet Raman.

3. Laser à effet Raman, comprenant :
- un laser de pompage (201) formé d'une première cavité résonnante (202) résonnant selon un premier axe optique, limitée respectivement, sur deux côtés opposés, par un premier miroir (203) et un deuxième miroir (204), d'axes optiques alignés avec ledit premier axe optique, respectivement totalement réfléchissant et faiblement réfléchissant à une première fréquence optique, ladite première cavité résonnante (202) comportant un déclencheur optique (205), capable de retarder la résonance de ladite première cavité résonnante (202), ainsi qu'un milieu optique amplificateur (206) pouvant être excité par un moyen d'excitation (207), cette première cavité résonnante (202) fournissant, au travers dudit deuxième miroir (204), un premier rayonnement optique, à ladite première fréquence optique ;
- un milieu à effet Raman (210), contenu dans une cellule (211), recevant ledit premier rayonnement, et fournissant, en réponse, un deuxième rayonnement par effet Raman, à une deuxième fréquence optique, ainsi qu'un troisième rayonnement, à une troisième fréquence optique, obtenu par effet Brillouin ;
- une seconde cavité résonnante (214) résonnant selon un second axe optique, contenant ladite cellule (211), et accordée à ladite deuxième fréquence optique, limitée, d'un côté, par un troisième miroir (215), d'axe optique aligné avec ledit second axe optique, totalement transparent à ladite première fréquence optique et totalement réfléchissant à ladite deuxième fréquence optique, et limitée, du côté opposé, par un quatrième miroir (216), d'axe optique aligné avec ledit second axe optique, totalement réfléchissant à ladite première fréquence optique et partiellement réfléchissant à ladite deuxième fréquence optique, et comportant un télescope (217,218) à foyer réel, d'axe optique aligné avec ledit second axe optique, dont le point de focalisation est situé dans ledit milieu à effet Raman (210) ;
- un polariseur optique (221), situé sur le trajet optique entre lesdits deuxième miroir (204) et troisième miroir (215) ; et
- une lame quart d'onde (222), accordée à ladite première fréquence, située entre ladite cellule (211) et ledit quatrième miroir (216),
caractérisé en ce que, à ladite troisième fréquence optique, lesdits deuxième miroir (204) et troisième miroir (215) et ledit polariseur (221) sont transparents, permettant ainsi le renvoi dudit troisième rayonnement dans ladite première cavité résonnante (202), et ledit premier miroir (203) est réflecteur.

4. Laser à effet Raman selon l'une quelconque des revendications 1 à 3,
caractérisé en ce que ledit laser de pompage (1) est un laser YAG:Nd.

5. Laser à effet Raman selon l'une quelconque des revendications 1 à 4,
caractérisé en ce que ledit déclencheur optique (5) est un absorbant saturable.

6. Laser à effet Raman selon l'une quelconque des revendications 1 à 5, comportant un déflecteur (119), caractérisé en ce que ledit déflecteur (119), situé sur le trajet optique entre ladite première cavité résonnante (2) et ladite cellule (11), est apte à défléchir d'un même angle lesdites première et troisième fréquences optiques.

7. Laser à effet Raman selon l'une quelconque des revendications 1 à 6,
caractérisé en ce que ladite cellule (11) comporte une première fenêtre (12), d'entrée, et une seconde fenêtre (13), de sortie, laissant passer lesdites première, deuxième et troisième fréquences, et en ce que ledit milieu à effet Raman (10) est un gaz.

8. Laser à effet Raman selon l'une quelconque des revendications 1 à 7,
caractérisé en ce que ledit deuxième miroir (4) est plan.

9. Laser à effet Raman selon l'une quelconque des revendications 1 à 8,
caractérisé en ce qu'au moins un élément focalisant (17,18) et un miroir voisin (15,16) sont réalisés sous la forme d'un seul élément optique.

10. Laser à effet Raman selon l'une quelconque des revendications 1 à 9,
caractérisé en ce qu'au moins un élément focalisant (17,18) a une distance focale identique pour la première et la deuxième fréquence.

## Patentansprüche

1. Raman-Effekt-Laser bestehend aus:
- einem Pumplaser (1) mit einem ersten nach einer ersten optischen Achse schwingenden Resonanzraum (2), der auf zwei entgegengesetzten Seiten durch einen ersten Spiegel (3) und einen zweiten Spiegel (4) begrenzt wird, deren optische Achsen auf die erste optische Achse ausgerichtet sind, und die eine erste optische Frequenz vollständig bzw. schwach reflektieren, wobei der erste Resonanzraum (2) einen optischen Güteschalter (5) hat, der die Resonanz des ersten Resonanzraums (2) verzögern kann, sowie ein verstärkendes optisches Medium (6), das durch ein Anregungsmittel (7) angeregt werden kann, wobei dieser erste Resonanzraum (2) durch den zweiten Spiegel (4) eine erste optische Strahlung mit der ersten optischen Frequenz abgibt;
- einem in einer Zelle (11) enthaltenen Raman-Effekt-Medium (10), an das die erste Strahlung gelangt und das als Reaktion eine zweite Raman-Effekt-Strahlung mit einer zweiten optischen Frequenz sowie eine dritte Strahlung mit einer dritten optischen Frequenz abgibt, die durch Brillouin-Effekt erhalten wird, und
- einem nach einer zweiten optischen Achse schwingenden zweiten Resonanzraum (14), der die Zelle (11) enthält und auf die zweite optische Frequenz abgestimmt ist, der auf der einen Seite durch einen dritten Spiegel (15), dessen optische Achse auf die zweite optische Achse ausgerichtet ist, der für die erste optische Frequenz vollständig durchlässig ist und die zweite optische Frequenz vollständig reflektiert, und auf der entgegengesetzten Seite durch einen vierten Spiegel (16) begrenzt wird, dessen optische Achse auf die zweite optische Achse ausgerichtet ist, der für die erste optische Frequenz vollständig durchlässig ist und die zweite optische Frequenz teilweise reflektiert, und der ein Teleskop (17,18) mit reellem Brennpunkt hat, dessen optische Achse auf die zweite optische Achse ausgerichtet ist und dessen Fokussierungspunkt im Raman-Effekt-Medium (10) liegt,
dadurch gekennzeichnet, daß der zweite Spiegel (4) und der dritte Spiegel (15) für die dritte optische Frequenz durchlässig sind und so die Rückkehr der dritten Strahlung in den ersten Resonanzraum (2) ermöglichen, und diese vom ersten Spiegel (3) reflektiert wird.

2. Raman-Effekt-Laser bestehend aus:
- einem Pumplaser (101) mit einem ersten nach einer ersten optischen Achse schwingenden Resonanzraum (102), der auf zwei entgegengesetzten Seiten von einem ersten Spiegel (103) bzw. einem zweiten Spiegel (104) begrenzt wird, deren optische Achsen auf die erste optische Achse ausgerichtet sind und die eine erste optische Frequenz vollständig bzw. schwach reflektieren, wobei der erste Resonanzraum (102) einen optischen Güteschalter (105), der die Resonanz der ersten Resonanzraums (102) verzögern kann, sowie ein verstärkendes optisches Medium (106) hat, das durch ein Anregungsmittel (107) angeregt werden kann, wobei dieser erste Resonanzraum (102) durch den zweiten Spiegel (104) eine erste optische Strahlung mit der ersten optischen Frequenz abgibt:
- einem Raman-Effekt-Medium (110) in einer Zelle (111), an das die erste Strahlung gelangt und das als Reaktion durch Raman-Effekt eine zweite Strahlung mit einer zweiten optischen Frequenz sowie durch Brillouin-Effekt eine dritte Strahlung mit einer dritten optischen Frequenz abgibt;
- einem zweiten nach einer zweiten optischen Achse schwingenden Resonanzraum (114) mit der Zelle (111), der auf die zweite optische Frequenz abgestimmt ist und auf der einen Seite durch einen dritten Spiegel (115), dessen optische Achse auf die zweite optische Achse ausgerichtet ist und der für die erste optische Frequenz voll durchlässig ist und die zweite optische Frequenz teilweise reflektiert, und auf der entgegengesetzten Seite durch einen vierten Spiegel (116) begrenzt wird, dessen optische Achse auf die zweite optische Achse ausgerichtet ist und der für die erste optische Frequenz voll durchlässig ist und die zweite optische Frequenz vollständig reflektiert, und der ein Teleskop (117,118) mit reellem Brennpunkt enthält, dessen optische Achse auf die zweite optische Achse ausgerichtet ist und dessen Fokussierungspunkt im Raman-Effekt-Medium (110) liegt; und
- einem optischen Trennelement (120) im Strahlengang zwischen dem ersten Resonanzraum (102) und der Zelle (111), an das die erste Strahlung aus dem ersten Resonanzraum (102) gelangt und das diese zumindest teilweise an die Zelle (111) überträgt,
dadurch gekennzeichnet, daß der zweite (104) und der dritte Spiegel (115) für die dritte optische Frequenz durchlässig sind und so die Rückkehr der dritten Strahlung in den ersten Resonanzraum (102) ermöglichen, und diese vom ersten Spiegel (103) reflektiert wird, und dadurch, daß das optische Trennelement (120) für die dritte optische Frequenz den Übergang der dritten Strahlung in den ersten Resonanzraum (102) ermöglichen, und die zweite Strahlung in eine andere Richtung als nach dem ersten Resonanzraum (102) lenken kann, so daß diese den Raman-Effekt-Laser verlassen kann.

3. Raman-Effekt-Laser bestehend aus:
- einem Pumplaser (201) mit einem ersten nach einer ersten optischen Achse schwingenden Resonanzraum (202), der auf zwei entgegengesetzten Seiten durch einen ersten Spiegel (203) und einen zweiten Spiegel (204) begrenzt wird, deren optische Achsen auf die erste optische Achse ausgerichtet sind, und die eine erste optische Frequenz vollständig bzw. schwach reflektieren, wobei der erste Resonanzraum (202) einen optischen Güteschalter (205), der die Resonanz des ersten Resonanzraums (202) verzögern kann, sowie ein verstärkendes optisches Medium (206) hat, das durch ein Anregungsmittel (207) angeregt werden kann, wobei dieser erste Resonanzraum (202) über den zweiten Spiegel (204) eine erste optische Strahlung mit der ersten optischen Frequenz abgibt;
- einem Raman-Effekt-Medium (210) in einer Zelle (211), an das die erste Strahlung gelangt und das als Reaktion eine zweite Strahlung durch Raman-Effekt mit einer zweiten optischen Frequenz sowie durch Brillouin-Effekt eine dritte Strahlung mit einer dritten optischen Frequenz abgibt;
- einem zweiten nach einer zweiten optischen Achse schwingenden Resonanzraum (214) mit der Zelle (211), der auf die zweite optische Frequenz abgestimmt ist und auf der einen Seite durch einen dritten Spiegel (215), dessen optische Achse auf die zweite optische Achse ausgerichtet ist, der für die erste optische Frequenz voll durchlässig ist und die zweite optische Frequenz vollständig reflektiert, und auf der entgegengesetzten Seite durch einen vierten Spiegel (216) begrenzt wird, dessen optische Achse auf die zweite optische Achse ausgerichtet ist und der die erste optische Frequenz vollständig und die zweite optische Frequenz teilweise reflektiert und ein Teleskop (217,218) mit reellem Brennpunkt hat, dessen optische Achse auf die zweite optische Achse ausge-richtet ist und dessen Fokussierungspunkt im Raman-Effekt-Medium (210) liegt;
- einem optischen Polarisator (221) im Strahlengang zwischen dem zweiten Spiegel (204) und dem dritten Spiegel (215) und
- einem Viertelwellenlängenplättchen (222), das auf die erste Frequenz abgestimmt ist und das sich zwischen der Zelle (211) und dem vierten Spiegel (216) befindet,
dadurch gekennzeichnet, daß der zweite Spiegel (204) und der dritte Spiegel (215) sowie der Polarisator (221) für die dritte optische Frequenz durchlässig sind, so daß die Rückkehr der dritten Strahlung in den ersten Resonanzraum (202) möglich ist, und diese vom ersten Spiegel (203) reflektiert wird.

4. Raman-Effekt-Laser nach einem der Ansprüche 1 bis 3,
dadurch gekennzeichnet, daß der Pumplaser (1) ein Nd-YAG-Laser ist.

5. Raman-Effekt-Laser nach einem der Ansprüche 1 bis 4,
dadurch gekennzeichnet, daß der optische Güteschalter (5) ein Sättigungsabsorber ist.

6. Raman-Effekt-Laser nach einem der Ansprüche 1 bis 5, mit einem Ablenker (119),
dadurch gekennzeichnet, daß der Ablenker (119) im Strahlengang zwischen dem ersten Resonanzraum (2) und der Zelle (11) die erste und dritte optische Frequenz um den gleichen Winkel ablenken kann.

7. Raman-Effekt-Laser nach einem der Ansprüche 1 bis 6,
dadurch gekennzeichnet, daß die Zelle (11) ein erstes Eintrittsfenster (12) und ein zweites Austrittsfenster (13) für die erste, zweite und dritte Frequenz hat, und dadurch, daß das Raman-Effekt-Medium (10) ein Gas ist.

8. Raman-Effekt-Laser nach einem der Ansprüche 1 bis 7,
dadurch gekennzeichnet, daß der zweite Spiegel (4) eben ist.

9. Raman-Effekt-Laser nach einem der Ansprüche 1 bis 8,
dadurch gekennzeichnet, daß mindestens ein Fokussierungselement (17,18) und ein benachbarter Spiegel (15,16) in Form eines einzigen optischen Elements ausgeführt sind.

10. Raman-Effekt-Laser nach einem der Ansprüche 1 bis 9,
dadurch gekennzeichnet, daß mindestens ein Fokussierungselement (17,18) eine für die erste und die zweite Frequenz identische Brennweite hat.

## Claims

1. Raman-effect laser, comprising:
- a pumping laser (1) formed of a first resonant cavity (2) resonating along a first optical axis, said cavity being bounded respectively, on two opposite sides, by a first mirror (3) and a second mirror (4), of optical axes aligned with said first optical axis, respectively totally reflecting and slightly reflecting at a first optical frequency, said first resonant cavity (2) including an optical Q-switch (5), which is capable of retarding the resonance of said first resonant cavity (2), as well as an amplifying optical medium (6) which can be excited by an excitation means (7), this first resonant cavity (2) supplying, through said second mirror (4), a first optical radiation at said first optical frequency;
- a Raman-effect medium (10), contained in a cell (11), receiving said first radiation, and supplying, in response, a second radiation by Raman effect, at a second optical frequency, as well as a third radiation, at a third optical frequency, obtained by Brillouin effect; and
- a second resonant cavity (14) resonating along a second optical axis, containing said cell (11), and tuned to said second optical frequency, which is bounded, on one side, by a third mirror (15), of optical axis aligned with said second optical axis, which is totally transparent at said first optical frequency and totally reflecting at said second optical frequency, and bounded, on the opposite side, by a fourth mirror (16), of optical axis aligned with said second optical axis, which is totally transparent at said first optical frequency and partially reflecting at said second optical frequency, and including a telescope (17, 18) with a real focus, of optical axis aligned with said second optical axis, the focal point of which is situated in said Raman-effect medium (10),
characterized in that, at said third optical frequency, said second mirror (4) and third mirror (15) are transparent, thus permitting the deflection of said third radiation into said first resonant cavity (2), and said first mirror (3) is reflecting.

2. Raman-effect laser, comprising:
- a pumping laser (101) formed of a first resonant cavity (102) resonating along a first optical axis, said cavity being bounded respectively, on two opposite sides, by a first mirror (103) and a second mirror (104), of optical axes aligned with said first optical axis, which are respectively totally reflecting and slightly reflecting at a first optical frequency, said first resonant cavity (102) including an optical Q-switch (105), capable of retarding the resonance of said first resonant cavity (102), as well as an amplifying optical medium (106) which can be excited by an excitation means (107), this first resonant cavity (102) supplying, through said second mirror (104), a first optical radiation at said first optical frequency;
- a Raman-effect medium (110), contained in a cell (111), receiving said first radiation and supplying, in response, a second radiation by Raman effect, at a second optical frequency, as well as a third radiation, at a third optical frequency, obtained by Brillouin effect;
- a second resonant cavity (114) resonating along a second optical axis, containing said cell (111), and tuned to said second optical frequency, which is bounded, on one side, by a third mirror (115), of optical axis aligned with said second optical axis, which is totally transparent at said first optical frequency and partially reflecting at said second optical frequency, and bounded, on the opposite side, by a fourth mirror (116), of optical axis aligned with said second optical axis, which is totally transparent at said first optical frequency and totally reflecting at said second optical frequency, and including a telescope (117, 118) with a real focus of optical axis aligned with said second optical axis, the focal point of which is situated in said Raman-effect medium (110); and
- an optical extractor element (120), situated on the optical path between said first resonant cavity (102) and said cell (111), receiving said first radiation emanating from said first resonant cavity (102) and transmitting it at least partially to said cell (111), characterized in that, at said third optical frequency, said second mirror (104) and third mirror (115) are transparent, thus permitting the deflection of said third radiation into said first resonant cavity (102), and said first mirror (103) is reflecting, and in that said optical extractor element (120) is capable, at said third optical frequency, of permitting the passage of said third radiation towards said first resonant cavity (102), and is capable of directing said second radiation in a direction other than that proceeding towards the first resonant cavity (102), thus permitting it to emerge from said Raman-effect laser.

3. Raman-effect laser, comprising:
- a pumping laser (201) formed of a first resonant cavity (202) resonating along a first optical axis, said cavity being bounded respectively, on two opposite sides, by a first mirror (203) and a second mirror (204), of optical axes aligned with said first optical axis, which are respectively totally reflecting and slightly reflecting at a first optical frequency, said first resonant cavity (202) including an optical Q-switch (205), which is capable of retarding the resonance of said first resonant cavity (202), as well as an amplifying optical medium (206) which can be excited by an excitation means (207), this first resonant cavity (202) supplying, through said second mirror (204), a first optical radiation at said first optical frequency;
- a Raman-effect medium (210), contained in a cell (211), receiving said first radiation and supplying, in response, a second radiation by Raman effect, at a second optical frequency, as well as a third radiation, at a third optical frequency, obtained by Brillouin effect;
- a second resonant cavity (214) resonating along a second optical axis, containing said cell (211), and tuned to said second optical frequency, which is bounded, on one side, by a third mirror (215), of optical axis aligned with said second optical axis, which is totally transparent at said first optical frequency and totally reflecting at said second optical frequency, and bounded, on the opposite side, by a fourth mirror (216), of optical axis aligned with said second optical axis, which is totally reflecting at said first optical frequency and partially reflecting at said second optical frequency, and including a telescope (217, 218) with a real focus, of optical axis aligned with said second optical axis, the focal point of which is situated in said Raman-effect medium (210);
- an optical polarizer (221), situated on the optical path between said second mirror (204) and third mirror (215); and
- a quarter-wave plate (222), tuned to said first frequency, situated between said cell (211) and said fourth mirror (216),
characterized in that, at said third optical frequency, said second mirror (204) and third mirror (215) and said polarizer (221) are transparent, thus permitting the deflection of said third radiation into said first resonant cavity (202), and said first mirror (203) is reflecting.

4. Raman-effect laser according to any one of Claims 1 to 3, characterized in that said pumping laser (1) is a YAG:Nd laser.

5. Raman-effect laser according to any one of Claims 1 to 4, characterized in that said optical Q-switch (5) is a saturable absorber.

6. Raman-effect laser according to any one of Claims 1 to 5, including a deflector (119), characterized in that said deflector (119), situated on the optical path between said first resonant cavity (2) and said cell (11), is capable of deflecting said first and third optical frequencies through one and the same angle.

7. Raman-effect laser according to any one of Claims 1 to 6, characterized in that said cell (11) includes a first, entrance window (12) and a second, exit window (13), transmitting said first, second and third frequencies, and in that said Raman-effect medium (10) is a gas.

8. Raman-effect laser according to any one of Claims 1 to 7, characterized in that said second mirror (4) is plane.

9. Raman-effect laser according to any one of Claims 1 to 8, characterized in that at least one focusing element (17, 18) and an adjacent mirror (15, 16) are constructed in the form of a single optical element.

10. Raman-effect laser according to any one of Claims 1 to 9, characterized in that at least one focusing element (17, 18) has an identical focal length for the first and the second frequency.
